# EUROPÄISCHE PATENTSCHRIFT

(11) **EP 1 200 743 B1**
(45) Veröffentlichungstag und Bekanntmachung des Hinweises auf die Patenterteilung: **03.08.2005**
(21) Anmeldenummer: 00951469.6
(22) Anmeldetag: 28.07.2000
(51) Int. Cl.: F15B 11/17, B62D 5/07, B66F 9/22, E02F 9/22

(54) **HYDRAULISCHE STEUERANORDNUNG ZUR BEDARFSTROMGEREGELTEN (LOAD-SENSING-GEREGELTEN) DRUCKMITTELVERSORGUNG VON VORZUGSWEISE MEHREREN, HYDRAULISCHEN VERBRAUCHERN**
HYDRAULIC CONTROL SYSTEM FOR LOAD-SENSING CONTROLLED SUPPLY OF HYDRAULIC FLUID FOR PREFERABLY SEVERAL HYDRAULIC CONSUMERS
DISPOSITIF DE COMMANDE HYDRAULIQUE DESTINE A L'ALIMENTATION EN AGENT DE PRESSION, REGLEE PAR DETECTION DE CHARGE, DE PREFERENCE DE PLUSIEURS CONSOMMATEURS HYDRAULIQUES

(30) Priorität: 06.08.1999 DE 19937224
(43) Veröffentlichungstag der Anmeldung: 02.05.2002
(73) Patentinhaber: Bosch Rexroth AG, 97816 Lohr am Main (DE)
(72) Erfinder: KAUSS, Wolfgang, F-69340 Francheville (FR)
(86) Internationale Anmeldenummer: PCT/EP2000/007341
(87) Internationale Veröffentlichungsnummer: WO 2001/011245

(56) Entgegenhaltungen:
- EP-A- 0 164 603
- EP-A- 0 458 050
- US-A- 4 044 786
- US-A- 4 838 756
- PATENT ABSTRACTS OF JAPAN vol. 010, no. 115 (M-474), 30. April 1986 (1986-04-30) & JP 60 245807 A (NITSUSEI JIYUSHI KOGYO), 5. Dezember 1985 (1985-12-05)
- PATENT ABSTRACTS OF JAPAN vol. 010, no. 167 (M-488), 13. Juni 1986 (1986-06-13) & JP 61 017703 A (TOSHIBA KIKAI), 25. Januar 1986 (1986-01-25)

## Beschreibung

Die Erfindung betrifft eine hydraulische Steueranordnung, mit der vorzugsweise mehrere hydraulische Verbraucher bedarfstromgeregelt mit Druckmittel vorsorgt werden und die die Merkmale aus dem Oberbegriff des Patentanspruchs 1 aufweist. Eine solche hydraulische Steueranordnung wird insbesondere in mobilen Arbeitsmachinen, wie zum Beispiel Baggerladern, verwendet.

Eine hydraulische Steueranordnung mit Bedarfstromregelung bzw. nach dem lastfühlenden (load-sensing) Prinzip ist aus der EP 0 566 449 B1 bekannt. Bei dieser bekannten Steueranordnung wird eine Verstellpumpe in Abhängigkeit vom höchsten Lastdruck der betätigten hydraulischen Verbraucher jeweils so eingestellt, daß der Pumpendruck um eine bestimmte Druckdifferenz über dem höchsten Lastdruck liegt. Den hydraulischen Verbrauchern fließt das Druckmittel über verstellbare Zumeßblenden zu, die zwischen einer Zulaufleitung, in die von der Verstellpumpe Druckmittel gefördert wird, und den hydraulischen Verbraucher angeordnet sind. Durch den Zumeßblenden nachgeschaltete Druckwaagen wird erreicht, daß bei von der Verstellpumpe ausreichend gelieferter Druckmittelmenge unabhängig von den Lastdrücken der hydraulischen Verbraucher eine bestimmte Druckdifferenz über die Zumeßblenden besteht, so daß die einem hydraulischen Verbraucher zufließende Druckmittelmenge nur noch vom Öffnungsquerschnitt der jeweiligen Zumeßblende abhängt. Wird eine Zumeßblende weiter geöffnet, so muß mehr Druckmittelmenge über sie fließen, um die bestimmte Druckdifferenz zu erzeugen. Die Verstellpumpe wird jeweils so verstellt, daß sie die benötigte Druckmittelmenge liefert. Man spricht deshalb auch von einer Bedarfsstomregelung.

Die den Zumeßblenden nachgeschalteten Druckwaagen werden in Öffnungsrichtung von dem Druck nach der jeweiligen Zumeßblende und in Schließrichtung von einem in einem rückwärtigen Steuerraum anstehenden Steuerdruck beaufschlagt, der üblicherweise dem höchsten Lastdruck aller von derselben Hydropumpe versorgten hydraulischen Verbraucher entspricht. Wenn bei einer gleichzeitigen Betätigung mehrerer hydraulischer Verbraucher die Zumeßblenden so weit aufgemacht werden, daß die von der bis zum Anschlag verstellten Hydropumpe gelieferte Druckmittelmenge kleiner ist als die insgesamt geforderte Druckmittelmenge, werden die den einzelnen hydraulischen Verbrauchern zufließenden Druckmittelmengen unabhängig vom jeweiligen Lastdruck der hydraulischen Verbraucher verhältnisgleich reduziert. Man spricht deshalb von einer Steuerung mit lastunabhängiger Durchflußverteilung (LUDV-Steuerung). Derart angesteuerte hydraulische Verbraucher werden kurz LUDV-Verbraucher genannt. Weil bei einer LUDV-Steuerung auch der höchste Lastdruck abgefühlt und von der Hydropumpe durch die Variation der geförderten Druckmittelmenge ein um eine bestimmte Druckdifferenz über dem höchsten Lastdruck liegender Zulaufdruck erzeugt wird, ist eine LUDV-Steuerung ein Sonderfall einer lastfühlenden oder load-sensing Steuerung (LS-Steuerung).

Für mehrere hydraulische Verbraucher, denen Druckmittel jeweils über eine Zumeßblende mit vorgeschalteter Druckwaage zufließt, die in Schließrichtung nur vom Druck vor der Zumeßblende und in Öffnungsrichtung nur vom Lastdruck des jeweiligen hydraulischen Verbrauchers und von einer Druckfeder beaufschlagt ist, erhält man keine lastunabhängige Durchflußverteilung. Man hat eine bloße LS-Steuerung und einen LS-Verbraucher. Eine solche Steuerung ist z.B. durch die DE 197 14 141 A1 bekannt. Bei einer gleichzeitigen Betätigung mehrerer hydraulischer Verbraucher und nicht ausreichend von der Verstellpumpe gelieferter Druckmittelmenge wird hier nur die dem lastdruckhöchsten hydraulischen Verbraucher zufließende Druckmittelmenge reduziert.

Aus der DE 197 03 997 A1 ist eine hydraulische Steueranordnung bekannt, zu der eine Verstellpumpe gehört, von der mehrere LUDV-Verbraucher und ein LS-Verbraucher mit Druckmittel versorgt werden. Der LS-Verbraucher ist eine hydraulische Lenkung, der Druckmittel bevorzugt zugeführt werden muß. Erreicht wird diese Priorität der hydraulischen Lenkung gegenüber den LUDV-Verbrauchern durch ein Prioritätsventil, das einen mit einem Abschnitt der Zulaufleitung stromauf der der Lenkung zugeordneten Zumeßblende verbundenen, ersten Anschluß und einen mit der, Lastmeideleitung verbundenen, zweiten Anschluß aufweist und dessen Ventilglied in Richtung Öffnen der Verbindung zwischen dem ersten Anschluß und dem zweiten Anschluß vom Lastdruck der Lenkung und der Kraft einer Druckfeder und in Richtung Schließen der Verbindung zwischen dem ersten Anschluß und dem zweiten Anschluß von dem im ersten Anschluß herrschenden Druck beaufschlagt wird. Das Prioritätsventil läßt, wenn der Lastdruck der Lenkung höher ist als der Lastdruck eines parallel dazu betätigten LUDV-Verbrauchers und die Verstellpumpe genügend Druckmittel für alle betätigten hydraulischen Verbraucher fördert (Fall der Sättigung) soviel Druckmittel aus der Zulaufleitung in die Lastmeldeleitung fließen, daß darin ein von der Höhe des Lastdrucks der Lenkung abhängiger Druck und in der Zulaufleitung ein Druck ansteht, der um eine bestimmte Druckdifferenz über dem Lenkungsdruck liegt. Wird soviel Druckmittel angefordert, daß die Verstellpumpe bis zum maximalen Hubvolumen verstellt wird (Fall der Untersättigung), so erhöht das Prioritätsventil den Druck in der Lastmeldeleitung soweit, daß die LUDV-Druckwaagen durch eine stärkere Drosselung des Druckmittelstroms die Druckdifferenz über die LUDV-Zumeßblenden soweit erniedrigen, daß der Druck in der Zulaufleitung dasselbe Niveau wie im Fall der Sättigung beibehält und die Druckdifferenz über die LS-Zumeßblende genauso groß wie im Fall der Sättigung ist.

Eine Steueranordnung mit Bedarfstromregelung kann außer mit einer Verstellpumpe mit LS-Pumpenregelventil auch mit einer Konstantpumpe und LSgesteuerter Bypassdruckwaage, über die von der Hydropumpe gefördertes und von den hydraulischen Verbrauchern nicht benötigtes Druckmittel zurück zu einem Tank fließt, realisiert werden. Die Verluste an nicht nutzbarer Energie sind hierbei allerdings höher als bei Verwendung einer Verstellpumpe.

Eine hydraulische Steueranordnung mit den Merkmalen aus dem Oberbegriff des Patentanspruchs 1 ist aus der DE 34 22 205 A1, Figur 4 bekannt. Darin sind die beiden Hydropumpen Konstantpumpen und die beiden Bedarfstromregler Bypassdruckwaagen. Eine Zulaufleitung führt von dem Druckausgang der zweiten Hydropumpe zu einem Steuerblock, während die erste Hydropumpe über ein Rückschlagventil in die Zulaufleitung fördert. Beide Druckwaagen werden in Schließrichtung vom Druck in der Lastmeldeleitung und einer Druckfeder und in Öffnungsrichtung vom Druck in der Zulaufleitung beaufschlagt. Dadurch daß man die Druckfeder an der der zweiten Hydropumpe zugeordneten zweiten Druckwaage eine einer etwas größeren Druckdifferenz entsprechende Kraft ausüben läßt als die Druckfeder an der der ersten Hydropumpe zugeordneten ersten Druckwaage, erreicht man, daß bei einem geringen Bedarf an Druckmittel nur die zweite Hydropumpe Druckmittel zum Steuerblock fördert, während die von der ersten Hydropumpe geförderte Druckmittelmenge über die erste Druckwaage drucklos zum Tank zurückfließt. Wenn der Druckmittelbedarf der gleichzeitig betätigten hydraulischen Verbraucher die Fördermenge der zweiten Hydropumpe übersteigt, sinkt der Druck in der Zulaufleitung unter einen durch den höchsten Lastdruck und die an der zweiten Druckwaage eingestellte Druckdifferenz bestimmten Wert ab. Die zweite Druckwaage schließt ganz. Die erste Druckwaage geht in Regelstellung und sorgt dafür, daß der Druck in der Zulaufleitung um die an der ersten Druckwaage eingestellte. Druckdifferenz über dem höchsten. Lastdruck liegt. In der bekannten Steueranordnung könnten die beiden Hydropumpen und die beiden Bypassdruckwaagen ohne weiteres auch durch zwei Verstellpumpen mit auf unterschiedliche Druckdifferenzen eingestellten LS-Pumpenregelventilen ersetzt werden.

Unabhängig davon, ob nun Konstantpumpen oder Verstellpumpen verwendet werden, ist die bekannte hydraulische Steueranordnung insofern nachteilig, als nach entsprechender Einstellung der Druckwaagen bzw. der Pumpenregelventile festgelegt ist, welche der beiden Hydropumpen die hydraulischen Verbraucher zunächst allein mit Druckmittel versorgt und welche dann zugeschaltet wird, wenn der Bedarf an Druckmittel die von der zweiten Hydropumpe (maximal) geförderte Druckmittelmenge übersteigt. Nachteilig ist dies insbesondere dann, wenn die Hydropumpen bezüglich der Fördermenge unterschiedlich groß sind oder wenn ein weiterer hydraulischer Verbraucher, zum Beispiel eine Lenkung, allein von der einen Hydropumpe mit Druckmittel versorgt werden kann.

Der Erfindung liegt deshalb die Aufgabe zugrunde, eine hydraulische Steueranordnung mit zwei Hydropumpen und den sonstigen Merkmalen aus dem Oberbegriff des Patentanspruchs 1 so weiterzuentwickeln, daß auf einfache Weise eine flexiblere Auswahl der unter Druck fördernden Hydropumpe im Hinblick auf den Druckmittelbedarf der hydraulischen Verbraucher möglich ist.

Das angestrebte Ziel wird erfindungsgemäß dadurch erreicht, daß bei einer gattungsgemäßen hydraulischen Steueranordnung gemäß dem kennzeichnenden Teil des Patentanspruchs 1 auch zwischen der zweiten Hydropumpe und der Zulaufleitung ein zu dieser hin öffnendes Rückschlagventil angeordnet ist und daß Mittel vorhanden sind, über die die Kraftbeaufschlagung der Bedarfstromregler derart veränderbar ist, daß-die hydraulischen Verbraucher sowohl allein von der ersten Hydropumpe als auch allein von der zweiten Hydropumpe mit Druckmittel versorgbar sind. Nach der Erfindung wird also die angestrebte Flexibilität durch Veränderung der Kraftbeaufschlagung der Regelkolben der Bedarfstromregler auf recht einfache Weise erhalten.

Vorteilhafte Ausgestaltungen einer erfindungsgemäßen Steueranordnung kann man den Unteransprüchen entnehmen.

So besteht gemäß Patentanspruch 2 eine erste vorteilhafte Möglichkeit, die Bedarfstromregler zu beeinflussen darin, daß an wenigstens einem Bedarfstromregler die Feder derart verstellbar ist, daß die der Kraft der Feder entsprechende Druckdifferenz am ersten Bedarfstromregler einmal größer und einmal kleiner ist als die der Kraft der Feder am zweiten Bedarfstromregler entsprechende Druckdifferenz. Bevorzugt ist dabei also die von der Feder am einen Bedarfstromregler in einem ersten Zustand bestimmte Druckdifferenz kleiner als die Druckdifferenz am anderen Bedarfstromregler. Die Feder kann nun stärker vorgespannt und dadurch in einen zweiten Zustand gebracht werden, in der die von ihr bestimmte Druckdifferenz größer als die Druckdifferenz am anderen Bedarfstromregler ist. Es ist jedoch auch denkbar, beide Federn in einem Ruhezustand etwa gleich stark vorzuspannen und zur Druckmittelversorgung der hydraulischen Verbraucher nur mit der einen oder nur mit der anderen Hydropumpe die eine oder die andere Feder stärker zu spannen.

Gemäß Patentanspruch 3 besteht eine zweite vorteilhafte Möglichkeit, die Bedarfstromregler zu beeinflussen darin, daß ein Steuerraum an der zweiten Wirkfläche des zweiten Bedarfstromreglers an die Zulaufleitung angeschlossen ist, daß die Lastmeldeleitung durch ein Schaltventil zum ersten Bedarfstromregler absperrbar ist, daß in der Sperrstellung des Schaltventils die erste Wirkfläche des ersten Bedarfstromreglers von Druck entlastbar ist und daß die Feder des ersten Bedarfstromreglers auf eine höhere Druckdifferenz eingestellt ist als die Feder des zweiten Bedarfstromreglers. Hier ist eine leicht unterschiedliche Einstellung der Bedarfstromregler und nur ein Schaltventil notwendig.

Gemäß Patentanspruch 4 besteht eine dritte vorteilhafte Möglichkeit, die Bedarfstromregier zu beeinflussen darin, daß die Lastmeldeleitung durch ein erstes Schaltventil zum ersten Bedarfstromregler und durch ein zweites Schaltventil zum zweiten Bedarfstromregler absperrbar ist und daß in der Sperrstellung eines Schaltventils die erste Wirkfläche des entsprechenden Bedarfstromreglers von Druck entlastbar ist. In diesem Fall sind gegenüber herkömmlichen Steueranordnungen keinerlei Änderungen an den Bedarfstromreglern notwendig. Außerdem können die beiden Bedarfstromregler auf gleiche Druckdifferenzen zwischen dem Pumpendruck und dem höchsten Lastdruck eingestellt werden, so daß in den Fällen, in denen nur die eine Hydropumpe oder nur die andere Hydropumpe die hydraulischen Verbraucher mit Druckmittel versorgt, die gleiche Druckdifferenz über die Zumeßblenden besteht.

Ist gemäß Patentanspruch 5 ein Steuerraum an der zweiten Wirkfläche eines Bedarfstromreglers stromauf des entsprechenden Rückschlagventils an einen zwischen der entsprechenden Hydropumpe und dem Rückschlagventil verlaufenden Strömungspfad angeschlossen, so können auf einfache Weise der Steuerraum und ein Arbeitsanschluß eines Bedarfstromreglers miteinander verbunden sein. Allerdings regelt dann der Bedarfstromregler bei Nichtbenutzung einer Hydropumpe einen Pumpendruck geringer Höhe ein, so daß selbst bei einer Verstellpumpe noch gewisse Verluste an nicht nutzbarer Energie auftreten. Von der Energiebilanz her günstiger erscheint es deshalb, wenn, wie in Patentanspruch 6 angegeben, ein Steuerraum an der zweiten Wirkfläche eines Bedarfstromreglers an die Zulaufleitung angeschlossen ist. Denn dann wird der Bedarfstromregler durch einen in der Zulaufleitung herrschenden Druck, der höher als das Druckäquivalent zur Kraft der Feder ist, in einer offenen Endstellung gehalten, in der die von einer Konstantpumpe geförderte Druckmittelmenge drucklos zum Tank abfließen kann oder eine Verstellpumpe ganz in Richtung Nullfördermenge verstellt wird.

Gemäß Patentanspruch 7 sind die beiden Hydropumpen hinsichtlich des Hubvolumens unterschiedlich groß, so daß eine gute Anpassung an den Betriebszustand und den davon abhängigen Druckmittelbedarf möglich ist.

Gemäß Patentanspruch 8 kann ein weiterer hydraulischer Verbraucher vorhanden sein, dem Druckmittel nur von der einen Hydropumpe zuführbar ist. Ist dieser weitere hydraulische Verbraucher ein LS-Verbraucher, der vorrangig mit Druckmittel zu versorgen ist, zum Beispiel eine hydraulische Lenkung, so kann, wenn die anderen hydraulischen Verbraucher LUDV-Verbraucher sind, die Priorität durch eine über das an sich notwendige Maß hinausgehende Vorspannung der LUDV-Druckwaagen der anderen Verbraucher gewährleistet werden. Insbesondere wird bei einer Ausbildung gemäß Patentanspruch 10 die Ansteuerung des bevorrechtigten Verbrauchers durch die anderen Verbraucher nicht beeinflußt. Allerdings verursachen die vorgespannten Schließfedern der LUDV-Druckwaagen Energieverluste. Wenn auch mit einem höheren Geräteaufwand verbunden, erscheint deshalb von der Energiebilanz her günstiger eine Ausbildung gemäß Patentanspruch 11, nach der im Fall der Untersättigung der Druck auf der Rückseite der LUDV-Druckwaagen über den höchsten Lastdruck hinaus erhöht und damit die Druckdifferenz und der Druckmittelfluß über die zweiten Zumeßblenden verringert wird.

Die Hydropumpen können solche mit einem konstanten Hubvolumen, denen ein Bypassdruckwaage zugeordnet ist, oder auch Verstellpumpen sein.

Mehrere als Schaltung aufgebaute Ausführungsbeispiele einer erfindungsgemäßen hydraulischen Steueranordnung sowie ein LUDV-Wegeventil, das in einer erfindungsgemäßen Steueranordnung verwendet werden kann, sind in den Zeichnungen dargestellt. Anhand der Figuren dieser Zeichnungen wird die Erfindung nun näher erläutert.

Es zeigen
- Figur 1: das erste Ausführungsbeispiel, das zwei unterschiedlich große Konstantpumpen mit Bypassdruckwaagen, mehrere LUDV-Verbraucher, die von nur einer Hydropumpe oder von beiden Hydropumpen gemeinsam mit Druckmittel versorgbar sind, und einen LS-Verbraucher, der nur von der einen Hydropumpe mit Druckmittel versorgbar ist, aufweist, wobei zur Auswahl der versorgenden Hydropumpe jeder Bypassdruckwaage ein Schaltventil zugeordnet ist, von dem eine Steuerseite der entsprechenden Bypassdruckwaage zur Lastmeldeleitung der LUDV-Verbraucher absperrbar ist,
- Figur 2: ein zweites Ausführungsbeispiel, das sich vom ersten Ausführungsbeispiel nur durch eine andere Art der Druckbeaufschlagung der Bypassdruckwaagen unterscheidet,
- Figur 3: ein drittes Ausführungsbeispiel, bei dem die Priorität eines LS-Verbrauchers durch Druckanhebung auf der Rückseite der LUDV-Druckwaagen der anderen Verbraucher gewährleistet ist und das ansonsten gleich dem ersten Ausführungsbeispiel ist,
- Figur 4: ein viertes Ausführungsbeispiel, bei dem zur Auswahl der fördernden Hydropumpe die Vorspannung der Regelfeder der einen Bypassdruckwaage veränderbar ist,
- Figur 5: ein fünftes Ausführungsbeispiel, bei dem zur Auswahl der fördernden Hydropumpe die Regelfedern der beiden Bypassdruckwaagen unterschiedlich stark vorgespannt sind und der Bypassdruckwaage mit der stärker vorgespannten Feder ein Schaltventil zugeordnet ist, von dem die eine Steuerseite dieser Bypassdruckwaage zur Lastmeldeleitung der LUDV-Verbraucher absperrbar ist, und
- Figur 6: einen Längsschnitt durch ein in den Steueranordnungen nach den Figuren 1 bis 5 verwendbares LUDV-Wegeventil.

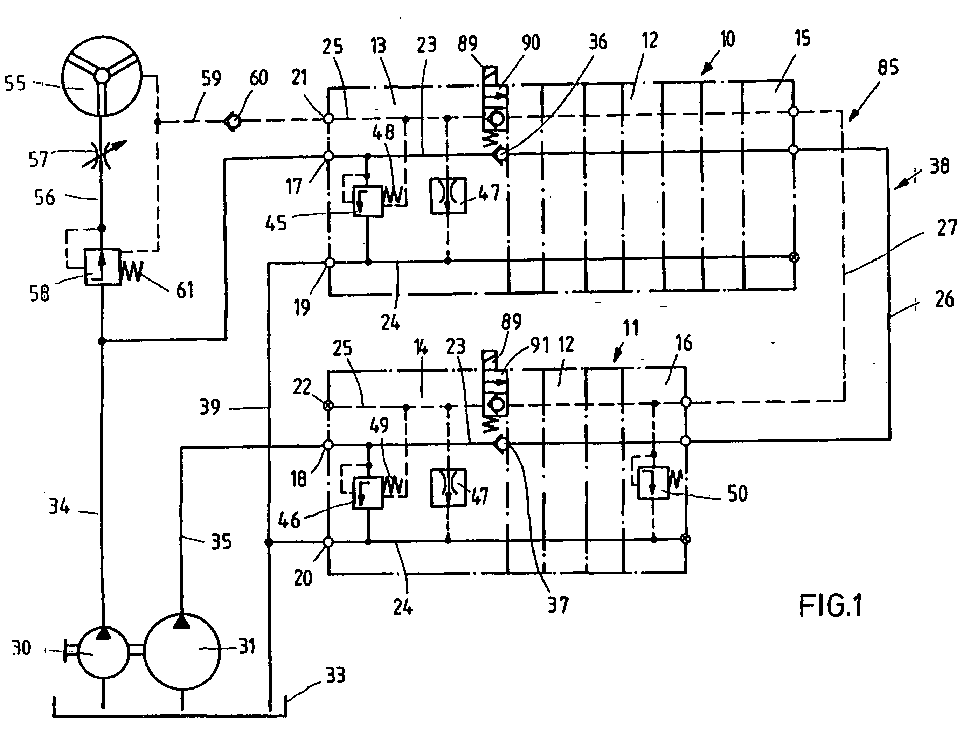

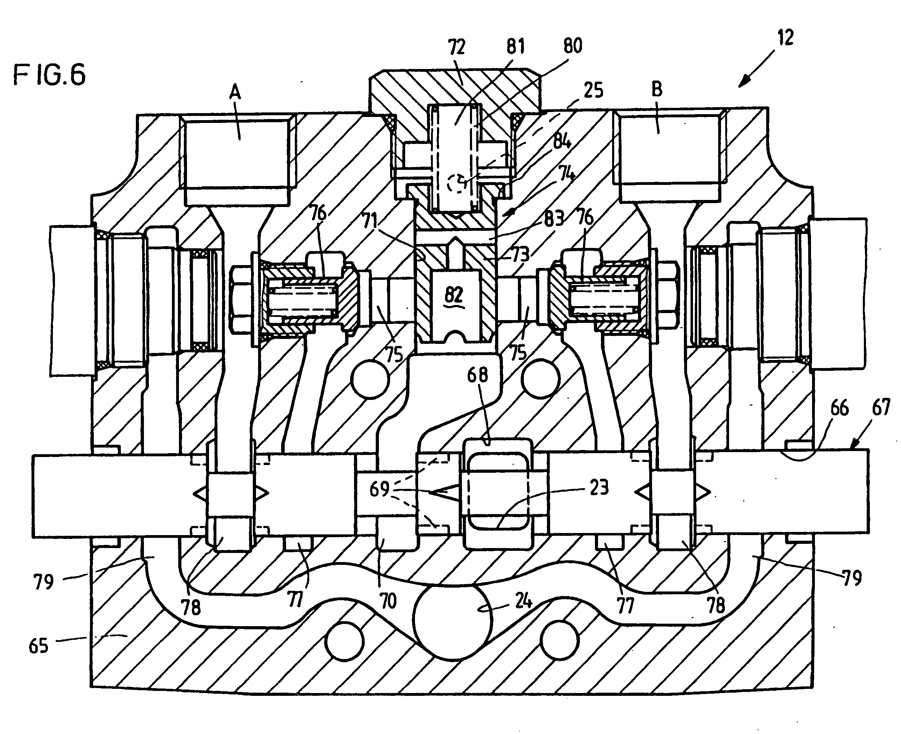

Die in den Figuren 1 bis 5 gezeigten hydraulischen Steueranordnungen umfassen zwei LUDV-Steuerblöcke 10 und 11 in Scheibenbauweise, die jeweils mehrere LUDV-Wegeventile 12, wie eines in Figur 6 dargestellt ist, eine Eingangsscheibe 13 bzw. 14 und eine Endscheibe 15 bzw. 16 umfassen. Mit jedem Wegeventil 12 kann ein hydraulischer Verbraucher, z.B ein doppeltwirkender Hydrozylinder hinsichtlich Bewegungsgeschwindigkeit und Bewegungsrichtung gesteuert werden. Jede Eingangsscheibe 13 bzw. 14 besitzt einen Pumpenanschluß 17 bzw. 18, einen Tankanschluß 19 bzw. 20 und einen Steueranschluß 21 bzw. 22, wobei der Steueranschluß 22 der Eingangsscheibe 14 des Steuerblocks 11 durch einen Stopfen verschlossen ist. Von den genannten Anschlüssen gehen Kanäle 23, 24 und 25 aus, die senkrecht zu den Scheibenebenen ganz durch den jeweiligen Steuerblock 10 bzw. 11 hindurch bis zur den Wegeventilen 12 abgewandten Seitenfläche der Endscheibe 15 bzw. 16 verlaufen. Dort ist der vom Tankanschluß 19 bzw. 20 ausgehende Tankkanal 24 durch einen Stopfen verschlossen. Die Kanäle 23 sind durch einen von der einen Endscheibe 15 zur anderen Endscheibe 16 verlaufende Leitung 26 und die Kanäle 25 durch eine zwischen den beiden Endscheiben verlaufende Leitung 27 fluidisch miteinander verbunden. Die in den Figuren 1 bis 5 gezeigten hydraulischen Steueranordnungen weisen erfindungsgemäß zwei Hydropumpen 30 und 31 auf, die Konstantpumpen sind und von denen die erste Hydropumpe 30 ein kleineres Hubvolumen als die zweite Hydropumpe 31 besitzt. Die Hydropumpe 30 gibt Druckmittel, das sie aus einem Tank 33 ansaugt, in eine Pumpenleitung 34 ab, die zu dem Pumpenanschluß 17 des Steuerblocks 10 führt. Die zweite Hydropumpe 31 gibt Druckmittel, das sie ebenfalls aus dem Tank 33 ansaugt, in eine Pumpenleitung 35 ab, die zu dem Pumpenanschluß 18 des Steuerblocks 11 führt. Vom Pumpenanschluß 17 kann von der Hydropumpe 30 gefördertes Druckmittel über ein Rückschlagventil 36, das innerhalb der Eingangsscheibe 13 in den Kanal 23 eingebaut ist, den Wegeventilen 12 des Steuerblocks 10 und über die Leitung 26 auch den Wegeventilen 12 des Steuerblocks 11 zufließen. Umgekehrt kann von der Hydropumpe 31 gefördertes Druckmittel über den Pumpenanschluß 18 des Steuerblocks 11 und über ein.weiteres in die Eingangsscheibe 14 dieses Steuerblocks eingebautes Rückschlagventil 37 den Wegeventilen 12 des Steuerblocks 11 und über die Leitung 26 auch den Wegeventilen 12 des Steuerblocks 10 zufließen. Die jeweiligen Abschnitte der Kanäle 23 stromab der Rückschlagventile 36 bzw. 37 sowie die Leitung 26 bilden somit eine Zulaufleitung 38, die allen Wegeventilen 12 der beiden Steuerblöcke 10 und 11 gemeinsam ist und in die von beiden Hydropumpen 30 und 31 Druckmittel gefördert werden kann. Die Abschnitte der Kanäle 25 in den Wegeventilen 12 und den Endscheiben 15 und 16 sowie die Leitung 27 seien als Lastmeldeleitung 85 bezeichnet.

Die Tankanschlüsse 19 und 20 der beiden Steuerblöcke 10 und 11 sind über Tankleitungen 39 fluidisch mit dem Tank 33 verbunden.

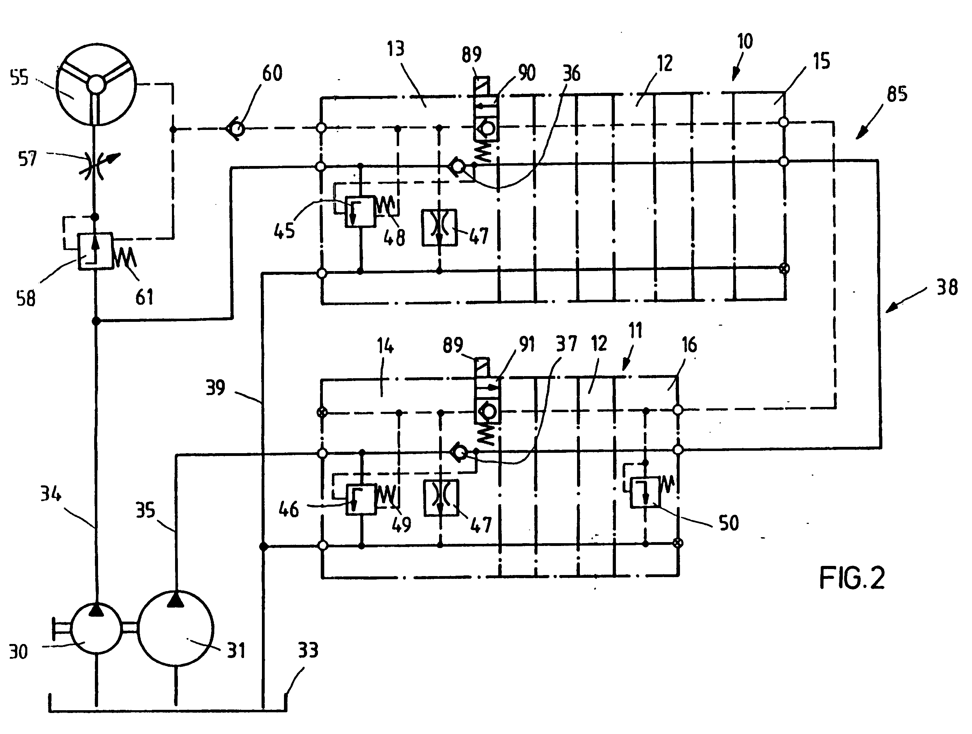

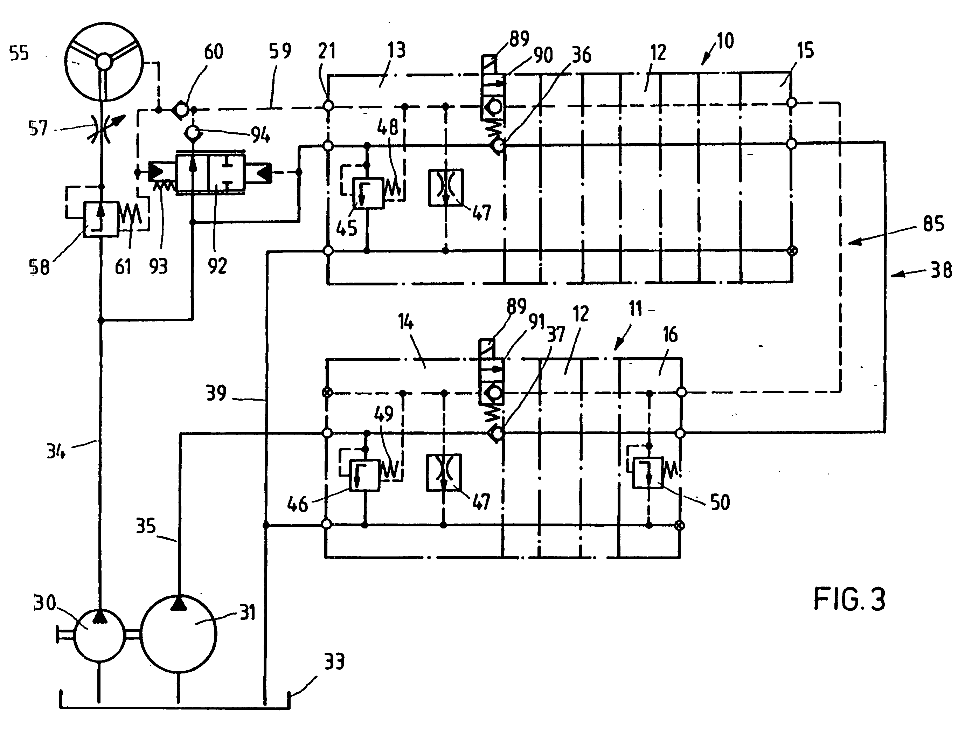

Außer einem Rückschlagventil 36 bzw. 37 enthalten bei allen Ausführungsbeispielen gemäß den Figuren 1 bis 5 die Eingangsscheiben 13 bzw. 14 eine Bypassdruckwaage 45 bzw. 46. die mit ihren Arbeitsanschlüssen zwischen die Kanäle 23 und 24 geschaltet ist, und einen Kleinstromregler 47, der zwischen dem jeweiligen Kanal 25 und dem jeweiligen Kanal 24 liegt und eine aus dem Kanal 25 in den Kanal 24 abfließende Druckmittelmenge begrenzt. Der Regelkolben jeder Bypassdruckwaage 45 bzw. 46 wird in Schließrichtung der Druckwaage von einem Druck beaufschlagt, der innerhalb eines in der Eingangsscheibe verlaufenden Abschnitts des jeweiligen Kanals 25 herrscht. Außerdem wirkt in Schließrichtung eine Druckfeder 48 (Druckwaage 45) bzw. eine Druckfeder 49 (Druckwaage 46). In Öffnungsrichtung der Druckwaagen 45 bzw. 46 wirkt jeweils der Druck am Pumpenanschluß 17 bzw. 18, also der Druck stromauf der Rückschlagventile 36 und 37 (Figuren 1 und 3) oder der Druck stromab der Rückschlagventile 36 und 37, also der Druck in der gemeinsamen Zulaufleitung 38 (Figuren 2, 4 und 5).

Die Endscheiben 15 und 16 der beiden Steuerblöcke dienen, wie schon erwähnt, in gleicher Weise dazu, um die Kanäle 24 zu verschließen und die Leitungen 26 und 27 an die Kanäle 23 und 25 anschließen zu können. Darüber hinaus ist in der Endscheibe 16 des Steuerblocks 11 ein Druckbegrenzungsventil 50 untergebracht, das zwischen dem Kanal 25 und dem Tankkanal 24 liegt und den Druck im Kanal 25 auf einen Höchstwert begrenzt.

Die mit den LUDV-Wegeventilen 12 ansteuerbaren hydraulischen Verbraucher werden als LUDV-Verbraucher bezeichnet. Die gezeigten Steueranordnungen umfassen darüber hinaus als weiteren hydraulischen Verbraucher eine hydraulische Lenkung 55, die in den Figuren mit einem stilisierten Lenkrad angedeutet ist. Dieser hydraulische Verbraucher ist allein von der ersten Hydropumpe 30 mit Druckmittel versorgbar. Dazu geht eine Versorgungsleitung 56 von der sich zwischen der Hydropumpe 30 und dem Pumpenanschluß 17 des Steuerblocks 10 erstreckenden Pumpenleitung 34 ab. Die hydraulische Lenkung 55 ist ein sogenannter LS-Verbraucher, dem Druckmittel über ein nicht näher dargestelltes Wegeventil, eine Zumeßblende 57 mit veränderbarem Öffnungsquerschnitt und eine stromauf der Zumeßblende 57 angeordnete Individualdruckwaage 58 zuführbar ist. Stromab der Zumeßblende 57 wird der Lenkungsdruck abgegriffen und über eine Steuerleitung 59 an den Steueranschluß 21 gegeben. Dabei befindet sich in der Steuerleitung 59 ein Rückschlagventil 60, das von dem Steueranschluß 21 zur Lenkung hin sperrt. Die Druckwaage 58 wird in Öffnungsrichtung von einer Druckfeder 61 und von dem Druck stromab der Zumeßblende 57 beaufschlagt. Dieser Druck wird stromauf des Rückschlagventils 60 an der Steuerleitung 59 abgegriffen. In Schließrichtung der Druckwaage 58 wirkt der zwischen der Druckwaage und der Zumeßblende 57 herrschende Druck. Die Druckfedern 48, 49 und 61 üben eine solche Kraft auf den jeweiligen Regelkolben der Druckwaagen 45, 46 und 58 aus, daß je nach Vorspannung der Druckfedern bei einer im Bereich zwischen 5 bar und 20 bar liegenden Druckdifferenz zwischen den beiden auf den Regelkolben wirkenden Drücken ein Kräftegleichgewicht am Regelkolben der Druckwaagen herrscht.

Die LUDV-Wegeventile 12 sind alle im wesentlichen gleich mit dem aus Figur 6 ersichtlichen Aufbau ausgebildet. Dieser ist an sich aus der EP 0 566 449 B1 bekannt, so daß hier nicht in aller Ausführlichkeit darauf eingegangen sei. Jedes LUDV-Wegeventil 12 weist ein scheibenförmiges Gehäuse 65 auf, das eine in der Scheibenebene liegende durchgehende Steuerbohrung 66 besitzt, in der ein Steuerschieber 67 axial bewegbar ist. Der Kanal 23 durchquert eine Zulaufkammer 68 der Steuerbohrung 66, die über Steuernuten 69 in einem Bund des Steuerschiebers 67 unabhängig von der Richtung, in der der Steuerschieber aus einer Mittelstellung bewegt wird, mit einer Zwischenkammer 70 verbindbar ist. Der Öffnungsquerschnitt zwischen den Steuernuten 69 und der Zulaufkammer 68 bzw. der Zwischenkammer 70 stellt eine veränderliche Zumeßblende der LUDV-Wegeventile 12 dar, und bestimmt die Geschwindigkeit, mit der ein hydraulischer Verbraucher bewegt wird. Die Zwischenkammer 70 hat fluidische Verbindung mit einer Bohrung 71, die ebenfalls in der Ebene des Gehäuses 65 liegt und senkrecht zu der Steuerbohrung 66 verläuft. In der Bohrung 71, die durch eine Verschlußschraube 72 verschlossen ist, befindet sich der Regelkolben 73 einer Druckwaage 74, von der ein Öffnungsquerschnitt zwischen der Bohrung 71 und einem Brückenkanal 75 gesteuert wird, in dessen beiden Zweigen sich jeweils ein Lasthalteventil 76 befindet und von dem jeder Zweig zu einer weiteren Kammer 77 der Steuerbohrung 66 führt. Jede Kammer 77 ist über den Steuerschieber 67 mit einer Verbrauchersteuerkammer 78 verbindbar, die Verbindung zu einem Verbraucheranschluß A oder B hat. Jenseits jeder Verbrauchersteuerkammer 78 befindet sich noch eine Ablaufsteuerkammer 79, die Verbindung zu dem senkrecht durch die Gehäusescheiben 65 hindurchgehenden Kanal 24 hat.

Der Regelkolben 73 der Druckwaage 74 wird im Sinne einer Öffnung der Verbindung zwischen der Zwischenkammer 70 und der Brückenpassage 75 von dem Druck in der Zwischenkammer 70, also von dem Druck stromab der Zumeßblende, die hier mit derselben Bezugszahl wie die Steuernuten 69 bezeichnet sei, beaufschlagt. In Schließrichtung wirkt auf den Regelkolben 73 ein Druck, der in einem Steuerraum 81 zwischen ihm und der Verschlußschraube 72 herrscht. Durch diese Steuerkammer geht der Kanal 25 hindurch. Außerdem wirkt in Schließrichtung auf den Regelkolben 73 eine Druckfeder 80, die nur schwach vorgespannt ist und deren Druckäquivalent z.B. 0,5 bar beträgt. Kräftegleichgewicht am Regelkolben 73 herrscht also, wenn der Druck stromab der Zumeßblende 69 um 0,5 bar höher als der Druck in dem rückwärtigen Steuerraum 81 ist. Der Regelkolben 73 ist mit einer axialen Sackbohrung 82, die zur Zwischenkammer 70 hin offen ist, und einer durchgehenden Querbohrung 83 versehen, in die die Axialbohrung mündet. Mit der Querbohrung 83 kann der Regelkolben 73 die innere Kante 84 einer Schulter in der Bohrung 71 überfahren und dadurch einen Fluidpfad zwischen der Axialbohrung 82 und dem rückwärtigen Steuerraum 81 und damit dem Kanal 25 öffnen. Der Fluidpfad ist geschlossen, solange der mit dem Wegeventil gesteuerte hydraulische Verbraucher nicht als einziger betätigt wird und nicht den höchsten Lastdruck aufweist. Der Regelkolben 73 befindet sich dann in einer Regelstellung, in der er einen Öffnungsquerschnitt zwischen der Zwischenkammer 70 und der Brückenpassage 75 so steuert, daß der Druck in der Zwischenkammer um das Druckäquivalent zur Kraft der Druckfeder 80 höher ist als der Druck in dem rückwärtigen Steuerraum 81. Hat der von dem Wegeventil nach Figur 6 gesteuerte hydraulische Verbraucher den höchsten Lastdruck, so macht der Regelkolben 73 der Druckwaage 74 die Verbindung zwischen der Zwischenkammer 70 und der Brückenpassage 75 ganz auf und regelt nun an der Steuerkante 84. Er kann nun wie der Regelkolben eines Druckdifferenzventils betrachtet werden, der in dem rückwärtigen Steuerraum 81 einen Druck einregelt, der um das Druckäquivalent zur Kraft der Druckfeder 80 niedriger als der Druck in der Zwischenkammer 70 und in der Brückenpassage 75 stromauf der Lasthalteventile 76 ist. Dieser Druck ist annähernd der Lastdruck des hydraulischen Verbrauchers, da die Schließfeder der verwendeten Lasthalteventile nur schwach ist und auch der Druckabfall zwischen einer Steuerkammer 77 und einer Steuerkammer 78 sehr klein ist. Somit wird der Lastdruck desjenigen hydraulischen Verbrauchers, der den höchsten Lastdruck hat, jeweils über den Regelkolben einer der in den Wegeventilen 12 enthaltenen Druckwaagen 74 in den Kanal 25 und damit in die rückwärtigen Steuerräume an den anderen Druckwaagen gemeldet. Die Kanäle 25 in den Steuerblöcken, die Verbindungsleitung 27 sowie die Steuerleitung 59 zwischen der Lenkung 55 und dem Steueranschluß 21 des Steuerblocks 10 bilden somit insgesamt eine Lastmeldeleitung 85. In den rückwärbgen Steuerräumen 81 der Wegeventile 12 steht dabei jeweils ein Druck an, der dem höchsten Lastdruck aller erwähnten hydraulischen Verbraucher einschließlich der Lenkung 55 entspricht. Das Rückschlagventil 60 stellt sicher, daß die Individualdruckwaage 58 der Lenkung 55 jeweils vom Lenkungsdruck beaufschlagt wird, auch wenn dies nicht der höchste Lastdruck ist. Andererseits läßt es das Rückschlagventil 60 zu, daß der Lastdruck der Lenkung 55 in die Kanäle 25 gelangt, wenn die Lenkung den höchsten Lastdruck hat.

Je nach den Gegebenheiten sollen nur die Hydropumpe 30, nur die Hydropumpe 31 oder beide Hydropumpen zur Druckmittelversorgung der verschiedenen hydraulischen Verbraucher herangezogen werden. Die gezeigten Schaltungen bringen es mit sich, daß bei einer Betätigung der Lenkung 55 immer die Pumpe 30 unter Druck gesetztes Druckmittel zur Verfügung stellen muß. Wird die Lenkung nicht betätigt, so kann eine Auswahl unter den Hydropumpen 30 und 31 in Abhängigkeit von der Menge des benötigten Druckmittels getroffen werden. Um eine solche Auswahl zu ermöglichen, enthält bei der Ausführung nach Figur 1 jede Eingangsscheibe 13 bzw. 14 ein durch einen Elektromagneten 89 betätigbares Schaltventil 90 bzw. 91, das unter der Wirkung einer Druckfeder eine Ruhestellung einnehmen kann, in der der innerhalb der Wegeventilscheiben 12 verlaufende Abschnitt des Kanals 25 zu dem in der Eingangsscheibe verlaufenden Abschnitt des Kanals 25 abgesperrt ist. Hat einer der Elektromagnete 89 eines der Schaltventile 90 oder 91 umgeschaltet, so sind die beiden genannten Abschnitte des Kanals 25 fluidisch miteinander verbunden. In dieser Schaltstellung wird die entsprechende Bypassdruckwaage 45 bzw. 46 in Schließrichtung vom höchsten Lastdruck aller betätigten hydraulischen Verbraucher einschließlich der Lenkung beaufschlagt. Die Kleinstromregler 47 dienen dazu, die eine Steuerseite der Druckwaagen 45 und 46 von Druck zu entlasten, wenn kein hydraulischer Verbraucher betätigt wird oder wenn sich ein Schaltventil 90 bzw. 91 in seiner Ruhestellung befindet.

Im folgenden sei das Ausführungsbeispiel nach Figur 1 in verschiedenen Betriebszuständen betrachtet, wobei davon ausgegangen wird, daß die Druckfedern 48 und 49 gleich stark vorgespannt sind und beide Hydropumpen 30 und 31 angetrieben werden. Wenn nur die hydraulische Lenkung 55 betätigt wird, befindet sich zumindest eines der Schaltventile 90 und 91 in seiner Ruhestellung, so daß zwar der Lastdruck der Lenkung über das Rückschlagventil 60 an die Bypassdruckwaage 45, jedoch nicht an die Bypassdruckwaage 46 gemeldet wird. Die Druckwaage 45 drosselt nun den Ablauf von Druckmittel aus der Pumpenleitung 34 zur Tankleitung 39 so weit an, daß sich in der Pumpenleitung ein Druck aufbaut, der um das Druckäquivalent zur Kraft der Druckfeder 48 höher als der Lastdruck der Lenkung ist. Das Druckäquivalent kann z.B. 20 bar betragen. Die Individualdruckwaage 58 ist bei einer Betätigung nur der Lenkung ohne Belang. Sie macht ganz auf, so daß über die Zumeßblende 57 ein Druckmittelstrom fließt, den eine Druckdifferenz von 20 bar hervorruft. Die Druckwaage 46 ist an ihrer mit dem Kanal 25 in der Eingangsscheibe 14 verbundenen Steuerseite von Druck völlig entlastet. Sie drosselt den Ablauf von Druckmittel aus der Pumpenleitung 35 in den Tankkanal 24 nur so stark an, daß entsprechend der Kraft der Druckfeder 49 im Pumpenkanal 35 ein Druck von 20 bar ansteht.

Es seien nun nur Wegeventile 12 derart betätigt, daß nur wenig Druckmittel benötigt wird. In diesem Fall wird das Schaltventil 91 in seiner Ruhestellung belassen, während das Schaltventil 90 von seinem Elektromagneten 89 in seine Durchgangsstellung gebracht ist. Nun wird der höchste Lastdruck aller über die Wegeventile 12 gleichzeitig betätigter hydraulischer Verbraucher an die Federseite der Druckwaage 45 gemeldet. Diese drosselt den Ablauf von Druckmittel wiederum so stark an, daß sich in der Pumpenleitung 34 ein um 20 bar über dem höchsten Lastdruck liegender Pumpendruck einstellt.

Wird mehr Druckmittel benötigt als die Hydropumpe 30 fördern kann, so wird das Schaltventil 91 in seine Durchgangsstellung gebracht, während das Schaltventil 90 seine Sperrstellung einnimmt. Nun ist die federseitige Steuerseite der Bypassdruckwaage 45 von Druck entlastet, so daß sie in der Pumpenleitung 34 einen Druck von 20 bar androsselt. Die Bypassdruckwaage 46 dagegen drosselt so stark an, daß der Druck in der Pumpenleitung 35 um 20 bar über dem höchsten Lastdruck aller über die Wegeventile 12 der beiden Steuerblöcke gerade betätigten hydraulischen Verbraucher liegt. Übersteigt die angeforderte Druckmittelmenge auch die von der Hydropumpe 31 zur Verfügung gestellte Druckmittelmenge, so werden beide Schaltventile 90 und 91 in ihre Durchgangsstellung gebracht, beide Druckwaagen 45 und 46 mit dem höchsten Lastdruck beaufschlagt und in beiden Pumpenleitungen 34 und 35 ein um 20 bar über dem höchsten Lastdruck liegender Druck aufgebaut. Nun werden die betätigten hydraulischen Verbraucher gemeinsam von beiden Hydropumpen 30 und 31 mit Druckmittel versorgt. Bei Verwendung nur einer der beiden Pumpen zur Druckmittelversorgung verhindern die Rückschlagventile 36 und 37, daß das geförderte Druckmittel über die jeweilige Bypassdruckwaage der anderen Hydropumpe zum Tank abfließt.

Die Ausführung nach Figur 2 unterscheidet sich von derjenigen nach Figur 1 nur dadurch, daß die federabgelegene Steuerseite der Druckwaagen 45 und 46 nun nicht stromauf, also innerhalb der Eingangsscheibe 13 bzw. 14, sondern stromab der Rückschlagventile mit dem jeweiligen Kanal 23 und somit mit der gemeinsamen Zulaufleitung 38 verbunden ist. Bei einer Druckmittelversorgung der hydraulischen Verbraucher mit nur einer der beiden Hydropumpen 30, 31 und der dies bewirkenden Entlastung der federseitigen Steuerseite einer der Druckwaagen 45 und 46 macht dann der in der gemeinsamen Zulaufleitung 38 herrschende und um 20 bar über dem höchsten Lastdruck liegende Zulaufdruck die eine Druckwaage ganz auf, so daß das von der einen, nicht benutzten Hydropumpe geförderte Druckmittel ohne jede Abdrosselung aus der Pumpenleitung zum Tank zurückfließen kann. Die Verluste an nicht nutzbarer Energie sind dann besonders gering.

Bei den beiden Ausführungsbeispielen nach den Figuren 1 und 2 sind zunächst keine unmittelbar ersichtlichen Maßnahmen ergriffen, um eine bevorrechtigte Druckmittelversorgung der Lenkung 55 zu gewährleisten. Man kann jedoch durch eine entsprechende Wahl der Vorspannung der Druckfeder 61 der Individualdruckwaage 58 der Lenkung und der Druckfedern 80 der LUDV-Druckwaagen 74 in den Wegeventilen 12 eine bevorzugte Druckmittelversorgung der Lenkung herbeiführen. Es ist dazu lediglich notwendig, das Druckäquivalent der Federn 80 genau so groß wie dasjenige der Druckfeder 61 zu machen. Z.B. kann man die Druckfedern auf ein Druckäquivalent von 5 bar vorspannen. Dies bedeutet, daß die Individualdruckwaage 58 über die Zumeßblende 57 eine Druckdifferenz von 5 bar aufrechterhält. Und es bedeutet, daß die Druckwaagen 74 den Druckmittelstrom zu einem hydraulischen Verbraucher jeweils so stark androsseln, daß in der Zwischenkammer 70 des in Figur 6 gezeigten Wegeventils ein Druck ansteht, der um 5 bar über dem Druck in den rückwärtigen Steuerräumen 81 liegt. Im Falle einer Untersättigung fällt der Pumpendruck in der Pumpenleitung 34 unter das aufgrund der Vorspannung der Druckfedern 48 und 49 der Bypassdruckwaagen 45 und 46 um 20 bar über dem höchsten Lastdruck liegende Niveau und ist im Extremfall nur noch 5 bar höher als der genannte Lastdruck. Dann besteht über die Zumeßblenden 69 keine Druckdifferenz mehr, so daß die gesamte von der Hydropumpe 30 geförderte Druckmittelmenge der Lenkung zufließt. Liegt der Pumpendruck zwischen den beiden Extremwerten, so besteht über die Zumeßblende 69 noch eine Druckdifferenz, die jedoch jeweils so klein ist, daß die Lenkung ausreichend Druckmittel erhält.

Die geschilderte Art, eine bevorrechtigte Versorgung der Lenkung mit Druckmittel zu gewährleisten, bringt im normalen Betrieb, wenn die Hydropumpen ausreichend Druckmittel fördern, Drosselverluste an der Druckwaage 58 und an den Druckwaagen 74 mit sich. Figur 3 zeigt eine hydraulische Steueranordnung, die bis auf die Maßnahmen zur bevorrechtigten Druckmittelversorgung der Lenkung gleich den in Figur 1 und in Figur 2 gezeigten Steueranordnungen ist. Die Priorität der Lenkung 55 in der Druckmittelversorgung wird nun durch ein zusätzliches Prioritätsventil 92 erhalten, das als 2/2-Wege-Proportionalventil ausgebildet ist und dessen Einbindung in die Steueranordnung an sich aus der DE 197 03 997 A1, Figur 3 bekannt ist. Das Ventil 92 vermag einen Strömungspfad zwischen der Pumpenleitung 34 und einer stromab des Rückschlagventils 60 liegenden Stelle der Steuerleitung 59 zwischen der Lenkung 55 und dem Anschluß 21 der Eingangsscheibe 13 des Steuerblocks 10 zu schließen oder mehr oder weniger weit zu öffnen. In Öffnungsrichtung wird es dabei vom Lenkungsdruck und von einer Druckfeder 93 beaufschlagt. Das Druckäquivalent dieser Druckfeder 93 ist kleiner als dasjenige der Druckfeder 48 der Druckwaage 45 und der Druckfeder 61 der Druckwaage 58. In Schließrichtung wird das Prioritätsventil 92 vom Druck in der Pumpenleitung 34 beaufschlagt. Zwischen dem Ausgang des Prioritätsventits 92 und die Leitung 59 ist noch ein zu dieser hin öffnendes Rückschlagventil 94 eingefügt. Am Prioritätsventil 92 tritt immer dann ein Kräfteungleichgewicht auf, wenn der Pumpendruck der Leitung 34 nicht mehr um das Druckäquivalent der Druckfeder 93 über dem Lenkungsdruck liegt. Dann öffnet das Prioritätsventil 92 den Strömungspfad zwischen der Pumpenleitung 34 und der Steuerleitung 59, so daß sich in dieser und damit in den rückwärtigen Steuerräumen 81 der Druckwaagen 74 der Druck erhöht. Dadurch werden die Druckwaagen in Richtung "Schließen" verstellt, bis die Kraft, die der Druck in der Zwischenkammer 70 auf den Regelkolben 73 ausübt, der vom Druck im Steuerraum 81 ausgeübten Kraft plus der Federkraft wieder das Gleichgewicht halten kann, bis also der Druck in der Zwischenkammer 70 wieder annähernd gleich dem Druck im rückwärtigen Steuerraum 81 ist. Dann hat sich aber die Druckdifferenz über die Zumeßblenden 89 verringert, so daß über diese weniger Druckmittel den mit den Wegeventilen 12 steuerbaren hydraulischen Verbrauchern zufließt und die Lenkung ausreichend Druckmittel erhält. Das Rückschlagventil 94 verhindert einen Druckmittelfluß von der Lenkung 55 über das Rückschlagventil 60 in die Pumpenleitung 34, wenn z.B. bei Beginn einer Betätigung der Druck in der Pumpenleitung noch nicht über dem Lastdruck der Lenkung liegt.

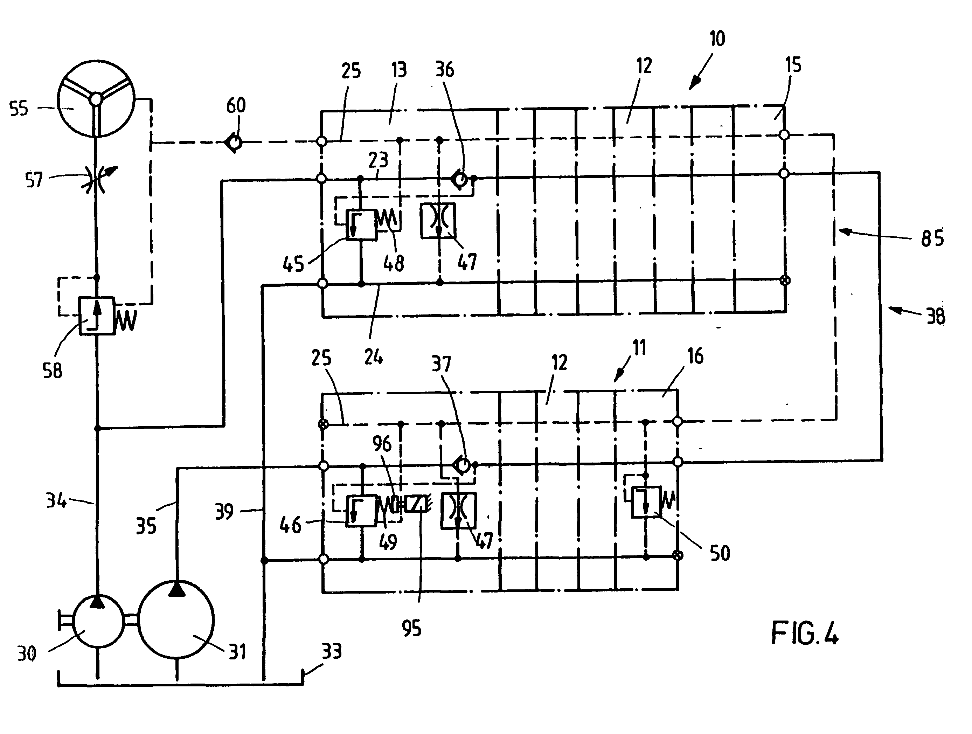

Die Steueranordnung nach Figur 4 ist hinsichtlich der Anbindung der Steuerseiten der Druckwaagen 45 und 46 gleich der Steueranordnung nach Figur 2. Nicht vorhanden sind die in Figur 2 gezeigten Schaltventile 90 und 91. Die Kanäle 25 gehen vielmehr ohne die Möglichkeit einer Unterbrechung durch den gesamten Steuerblock 10 bzw. 11 hindurch. Anders als bei der Ausführung nach Figur 2 läßt sich nun die Vorspannung der Druckfeder 49 der Bypassdruckwaage 46 verändem. Dazu ist dieser Druckwaage ein Elektromagnet 95 zugeordnet, der einen Federteller 96 axial zwischen zwei Anschlägen verschieben kann. In der Ruhestellung des Elektromagneten 95 ist die Druckfeder 49 so weit entspannt, daß ihr Druckäquivalent kleiner als dasjenige der Druckfeder 48 der Bypassdruckwaage 45 ist. Z.B. betrage ihr Druckäquivalent 18 bar, während das Druckäquivalent der Druckfeder 48 20 bar sein möge. Wird dann der Elektromagnet 95 erregt, so wird die Druckfeder 49 auf ein Druckäquivalent vorgespannt, das größer als das Druckäquivalent der Druckfeder 48 ist. Es betrage dann z.B. 22 bar.

Es sei nun angenommen, daß der Elektromagnet 95 ausgeschaltet ist und über ein Wegeventil 12 ein hydraulischer Verbraucher mit einem Lastdruck von z.B. 100 bar betätigt wird. Mit diesem Druck werden die beiden Bypassdruckwaagen 45 und 46 in Schließrichtung beaufschlagt, so daß sich in den Pumpenleitungen 34 und 35 ein Druck aufbaut. Dieser Druck wird schließlich 18 bar höher als der in der Lastmeideleitung 85 anstehende höchste Lastdruck. Nun beginnt die Bypassdruckwaage 46, deren Druckfeder bei ausgeschaltetem Elektromagnet ein Druckäquivalent von 18 bar hat, zu regeln. Wird mehr Druckmittel gebraucht als die Hydropumpe 30 liefern kann, so bleibt im folgenden die Bypassdruckwaage 45 geschlossen und beide Hydropumpen fördern gemeinsam in die Zulaufleitung 38. Die Bypassdruckwaage 46 regelt die Druckdifferenz zwischen dem höchsten Lastdruck und dem Pumpendruck in Höhe von 18 bar. Reicht dagegen die von der Hydropumpe 30 geförderte Druckmittelmenge zur Druckmittelversorgung der hydraulischen Verbraucher aus, so steigt der Pumpendruck um mehr als 18 bar über den höchsten Lastdruck an. Dadurch wird die Bypassdruckwaage 46 vollständig geöffnet und die Hydropumpe 31 fördert im Umlauf zum Tank. Die Bypassdruckwaage 45 dagegen regelt einen um 20 bar über dem höchsten Lastdruck liegenden Pumpendruck ein. Reicht die von der Hydropumpe 30 geförderte Druckmittelmenge nicht, aber diejenige der Hydropumpe 31 zur Druckmittelversorgung der hydraulischen Verbraucher aus, so wird der Elektromagnet 95 erregt und das Druckäquivalent der Druckfeder 49 auf 22 bar gesetzt. Nun öffnet die Bypassdruckwaage 45 ganz, so daß die Hydropumpe 30 im Umlauf fördert und die hydraulischen Verbraucher von der Hydropumpe 31 mit Druckmittel versorgt werden.

Im Falle einer Lenkbetätigung muß der Elektromagnet 95 entregt sein, damit sich in der Pumpenleitung 34 ein Druck aufbauen kann.

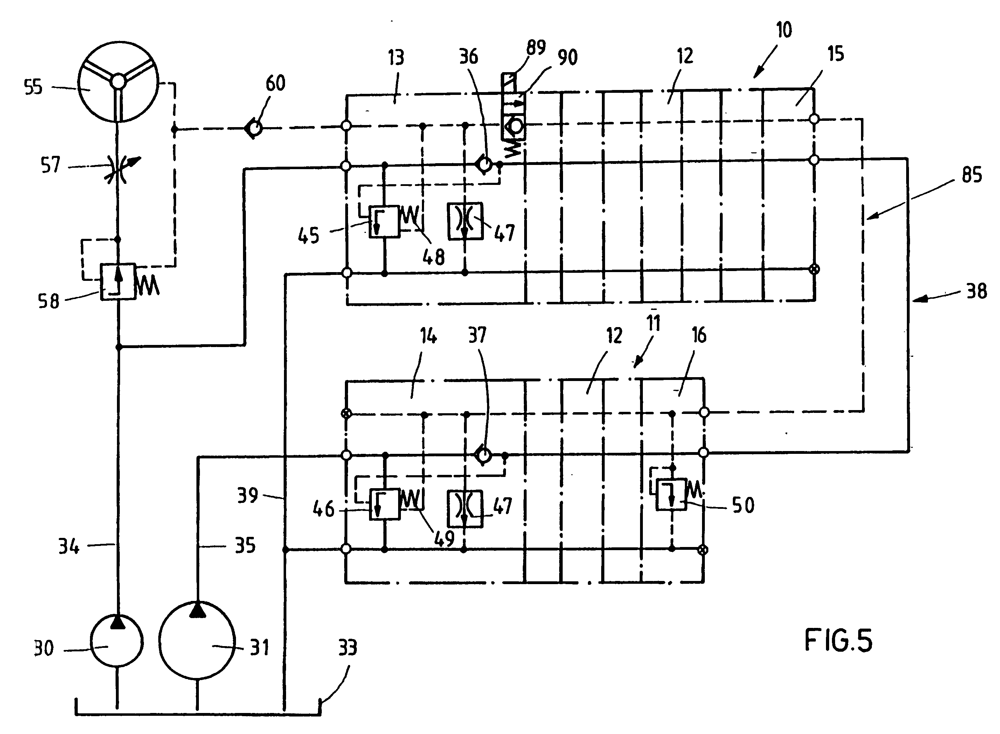

Die Ausführung nach Figur 5 entspricht hinsichtlich der Anbindung der Steuerseiten der beiden Druckwaagen 45 und 46 den in den Figuren 2 und 4 gezeigten Ausführungen. Dabei ist anders als bei der Ausführung nach Figur 4 die Druckfeder 49 der Bypassdruckwaage 46 fest auf ein Druckäquivalent von z.B. 18 bar vorgespannt. Die Druckfeder 48 der Bypassdruckwaage 45 ist wiederum auf 20 bar vorgespannt. Während bei der Ausführung nach Figur 2 zwei Schaltventile 90 und 91 vorhanden sind, die bei der Ausführung nach Figur 4 gänzlich fehlen, besitzt die Steueranordnung nach Figur 5 nur das Schaltventil 90, das sich wie in der Ausführung nach Figur 2 in der Eingangsscheibe 13 des Steuerblocks 10 befindet. Dieses Schaltventil 90 kann die Lastmeldeleitung 85 zur federseitigen Steuerseite der Bypassdruckwaage 45 absperren, so daß der höchste Lastdruck der mit den Wegeventilen 12 betätigten hydraulischen Verbraucher der Bypassdruckwaage 45 nicht gemeldet wird, daß deren federseitige Steuerseite vielmehr über den Kleinstromregler 47 zum Tank entlastet ist. Wenn sich das Schaltventil 90 in seiner Durchgangsstellung befindet und die Hydropumpe 30 genügend Druckmittel zur Versorgung der hydraulischen Verbraucher liefert, arbeitet die hydraulische Steueranordnung nach Figur 5 genauso wie diejenige nach Figur 4, wenn deren Elektromagnet 95 abgeschaltet ist. Die Bypassdruckwaage 46 ist dann ganz offen und die Bypassdruckwaage 45 regelt in der Pumpenleitung 34 und der Zulaufleitung 38 einen Druck ein, der um 20 bar über dem höchsten Lastdruck der gerade betätigten hydraulischen Verbraucher liegt. Erst wenn die von der Hydropumpe 30 geförderte Druckmittelmenge nicht mehr ausreicht, um auch bei geschlossener Bypassdruckwaage 45 einen Pumpendruck, der um 20 bar über dem höchsten Lastdruck liegt, aufrechtzuerhalten, sackt der Pumpendruck auf 18 bar über dem höchsten Lastdruck ab, so daß die Bypassdruckwaage 46 zu regeln anfängt und nun beide Hydropumpen 30 und 31 Druckmittel in die Zulaufleitung 38 fördern. Soll allein die Hydropumpe 31 Druckmittel zu den hydraulischen Verbrauchern fördern, so nimmt das Schaltventil 90 seine Ruhestellung ein, in der die federseitige Steuerseite der Bypassdruckwaage 45 zum Tank entlastet ist und der Druck in der Zulaufleitung 38 diese Druckwaage ganz zu öffnen vermag. Es fördert nun die Hydropumpe 30 im Umlauf zum Tank. Die Bypassdruckwaage 46 dagegen läßt jeweils soviel der von der Hydropumpe 31 geförderten Druckmittelmenge zum Tank abfließen, daß sich in der Zulaufleitung ein um 18 bar über dem höchsten Lastdruck liegender Druck einstellt.

## Patentansprüche

1. Hydraulische Steueranordnung zur bedarfstromgeregelten Druckmittelversorgung von vorzugsweise mehreren hydraulischen Verbrauchern,
mit proportional verstellbaren Wegeventilen (12) zur Steuerung der hydraulischen Verbraucher,
mit einer ersten Hydropumpe (30) und mit einer zweiten Hydropumpe (31), die gemeinsam antreibbar sind und von denen Druckmittel in einer dem Bedarf entsprechenden Menge in eine gemeinsame, zu den Wegeventilen (12) führenden Zulaufleitung (26) förderbar ist,
mit einem ersten Bedarfstromregler (45), der der ersten Hydropumpe (30) zugeordnet ist, und mit einem zweiten Bedarfstromregler (46), der der zweiten Hydropumpe (31) zugeordnet ist, wobei beide Bedarfstromregler (45, 46) im Sinne einer Vergrößerung der von der entsprechenden Hydropumpe (30, 31) in die Zulaufleitung (26) abgegebenen Druckmittelmenge von einer Feder (48, 49) und an einer ersten Wirkfläche vom Druck in einer Lastmeldeleitung (85) und im Sinne einer Verringerung der von der entsprechenden Hydropumpe (30, 31) in die Zulaufleitung (26) abgegebenen Druckmittelmenge an einer zweiten Wirkfläche von einem Pumpendruck beaufschlagbar sind,
und mit einem zwischen der ersten Hydropumpe (30) und der Zulaufleitung (26) angeordneten und zu dieser hin öffnenden Rückschlagventil (36),
**dadurch gekennzeichnet,**
**daß** auch zwischen der zweiten Hydropumpe (31) und der Zulaufleitung (26) ein zu dieser hin öffnendes Rückschlagventil (37) angeordnet ist und
**daß** Mittel (90, 91, 95, 96) vorhanden sind, über die die Kraftbeaufschlagung der Bedarfstromregler (45, 46) derart veränderbar ist, daß die hydraulischen Verbraucher sowohl allein von der ersten Hydropumpe (30) als auch allein von der zweiten Hydropumpe (31) mit Druckmittel versorgbar sind.

2. Hydraulische Steueranordnung nach Anspruch 1, **dadurch gekennzeichnet, daß** ein Steuerraum an der zweiten Wirkfläche eines Bedarfstromreglers (45, 46) an die Zulaufleitung (26) angeschlossen ist und daß an wenigstens einem Bedarfsstromregler (46) die Feder (49) derart verstellbar ist, daß die der Kraft der Feder (48) am ersten Bedarfstromregler (45) entsprechende Druckdifferenz einmal größer und einmal kleiner ist als die der Kraft der Feder (49) am zweiten Bedarfstromregler (46) entsprechende Druckdifferenz.

3. Hydraulische Steueranordnung nach Anspruch 1, **dadurch gekennzeichnet, daß** ein Steuerraum an der zweiten Wirkfläche des zweiten Bedarfstromreglers (46) an die Zulaufleitung (26) angeschlossen ist, daß die Lastmeldeleitung (85) durch ein Schaltventil (90) zum ersten Bedarfstromregler (45) absperrbar ist, daß in der Sperrstellung des Schaltventils (90) die erste Wirkfläche des ersten Bedarfstromreglers (45) von Druck entlastbar ist und daß die Feder (48) des ersten Bedarfstromreglers (45) auf eine höhere Druckdifferenz eingestellt ist als die Feder (49) des zweiten Bedarfstromreglers (46).

4. Hydraulische Steueranordnung nach Anspruch 1, **dadurch gekennzeichnet, daß** die Lastmeldeleitung (85) durch ein erstes Schaltventil (90) zum ersten Bedarfstromregler (45) und durch ein zweites Schaltventil (91) zum zweiten Bedarfstromregler (46) absperrbar ist und daß in der Sperrstellung eines Schaltventils (90, 91) die erste Wirkfläche des entsprechenden Bedarfstromreglers (45, 46) von Druck entlastbar ist.

5. Hydraulische Steueranordnung nach Anspruch 4, **dadurch gekennzeichnet, daß** ein Steuerraum an der zweiten Wirkfläche eines Bedarfstromreglers (45, 46) stromauf des entsprechenden Rückschlagventils (36, 37) an einen zwischen der entsprechenden Hydropumpe (30, 31) und dem Rückschlagventil (36, 37) verlaufenden Strömungspfad angeschlossen ist.

6. Hydraulische Steueranordnung nach Anspruch 4, **dadurch gekennzeichnet, daß** ein Steuerraum an der zweiten Wirkfläche eines Bedarfstromreglers (45, 46) an die Zulaufleitung (26) angeschlossen ist.

7. Hydraulische Steueranordnung nach einem vorhergehenden Anspruch, **dadurch gekennzeichnet, daß** die beiden Hydropumpen (30, 31) hinsichtlich des Hubvolumens unterschiedlich groß sind.

8. Hydraulische Steueranordnung nach einem vorhergehenden Anspruch, **dadurch gekennzeichnet, daß** ein weiterer hydraulischer Verbraucher (55) vorhanden ist, der nur von der einen Hydropumpe (30) von einer Stelle stromauf des einen Rückschlagventils (36) mit Druckmittel versorgbar ist.

9. Hydraulische Steueranordnung nach Anspruch 8, **dadurch gekennzeichnet, daß** der weitere hydraulische Verbraucher (55) eine hydraulische Lenkung ist.

10. Hydraulische Steueranordnung nach Anspruch 8 oder 9, **dadurch gekennzeichnet, daß** dem weiteren hydraulischen Verbraucher (55) Druckmittel über eine erste Zumeßblende (57) zuführbar ist, über die durch eine vorgeschaltete, erste Druckwaage (58) eine konstante Druckdifferenz einstellbar ist, daß den anderen hydraulischen Verbrauchern Druckmittel über zweite Zumeßblenden (69) zuführbar ist, denen jeweils eine zweite Druckwaage (74) mit einem Regelkolben (73) nachgeschaltet ist, der in Schließrichtung vom in der Lastmeldeleitung (85) herrschenden Druck und von einer Schließfeder (80) und in Öffnungsrichtung vom Druck stromab der jeweiligen zweiten Zumeßblende (69) beaufschlagt ist, und
daß die Schließfedern (80) eine Kraft auf die Regelkolben (73) ausüben, deren Druckäquivalent etwa gleich der von der ersten Druckwaage (58) über die erste Zumeßblende (57) eingeregelten Druckdifferenz ist.

11. Hydraulische Steueranordnung nach Anspruch 8 oder 9, **dadurch gekennzeichnet, daß** dem weiteren hydraulischen Verbraucher (55) Druckmittel über eine erste Zumeßblende (57) zuführbar ist, über die durch eine vorgeschaltete, erste Druckwaage (58) eine konstante Druckdifferenz einstellbar ist, daß den anderen hydraulischen Verbrauchern Druckmittel über zweite Zumeßblenden (69) zuführbar ist, denen jeweils eine zweite Druckwaage (74) nachgeschaltet ist, die in Schließrichtung vom in der Lastmeldeleitung (85) herrschenden Druck und in Öffnungsrichtung vom Druck stromab der jeweiligen zweiten Zumeßblende (69) beaufschlagt ist, und daß ein Ventil (92) vorhanden ist, das von dem Druckabfall über die erste Zumeßblende (57) steuerbar und über das der Druck in der Lastmeideleitung (85) durch Einspeisung von Druckmittel über den höchsten Lastdruck erhöhbar ist.

12. Hydraulische Steueranordnung nach einem vorhergehenden Anspruch, **dadurch gekennzeichnet, daß** eine Hydropumpe (30, 31) eine solche mit einem konstanten Hubvolumen ist und daß der dieser Hydropumpe (30, 31) zugeordnete Bedarfstromregler (45, 46) eine Bypassdruckwaage ist, von der ein Durchflußquerschnitt zwischen einem zwischen der Hydropumpe (30, 31) und dem entsprechenden Rückschlagventil (36, 37) verlaufenden Strömungspfad und einer zu einem Tank (33) führenden Ablaufleitung (39) steuerbar ist.

13. Hydraulische Steueranordnung nach einem vorhergehenden Anspruch, **dadurch gekennzeichnet, daß** eine Hydropumpe eine solche mit veränderlichem Hubvolumen ist und daß der dieser Hydropumpe zugeordnete Bedarfstromregler ein die Verstellung der Hydropumpe steuerndes Pumpenregelventil ist.

14. Hydraulische Steueranordnung nach einem vorhergehenden Anspruch,
**dadurch gekennzeichnet, daß** zur Druckentlastung der ersten Wirkfläche eines Bedarfstromreglers (45, 46) ein Stromventil (47) vorgesehen ist, das zwischen einem an die erste Wirkfläche angrenzenden Druckraum und einer Ablaufleitung (24) zu einem Tank (33) angeordnet ist.

15. Hydraulische Steueranordnung nach Anspruch 14, **dadurch gekennzeichnet, daß** das Stromventil (47) ein Stromregelventil ist.

## Claims

1. A hydraulic control arrangement for the demand-feed regulated supply of pressure medium to preferably a plurality of hydraulic consumers,
with proportionally adjustable directional valves (12) for controlling the hydraulic consumers,
with a first hydraulic pump (30) and with a second hydraulic pump (31) which are capable of being driven jointly and by which pressure medium can be conveyed in a quantity corresponding to the demand into a common inlet line (26) leading to the directional valves (12),
with a first demand-feed regulator (45) which is assigned to the first hydraulic pump (30) and with a second demand-feed regulator (46) which is assigned to the second hydraulic pump (31), the two demand-feed regulators (45, 46) being capable of being acted upon, with the effect of increasing the pressure medium quantity discharged into the inflow line (26) by the corresponding hydraulic pump (30, 31), by a spring (48, 49) and, on a first active surface, by the pressure in a load-signalling line (85) and, with the effect of reducing the pressure medium quantity discharged into the inflow line (26) by the corresponding hydraulic pump (30, 31), on a second active surface, by a pump pressure,
and with a nonreturn valve (36) arranged between the first hydraulic pump (30) and the inflow line (26) and opening towards the latter,
**characterized by the fact that** a nonreturn valve (37) opening towards the inflow line (26) is also arranged between the second hydraulic pump (31) and said inflow line, and that there are means (90, 91, 95, 96) by which the action of force upon the demand-feed regulators (45, 46) can be changed in such a way that the hydraulic consumers can be supplied with pressure medium both solely by the first hydraulic pump (30) and solely by the second hydraulic pump (31).

2. A hydraulic control arrangement according to claim 1, **characterized by** the fact that a control space on the second active surface of a demand-feed regulator (45, 46) is connected to the inflow line (26), and that, on at least one demand-feed regulator (46), the spring (49) can be adjusted in such a way that the pressure difference corresponding the force of the spring (48) on the first demand-feed regulator (45) is, on the one hand, greater and, on the other hand, lower than the pressure difference corresponding to the force of the spring (49) on the second demand-feed regulator (46)

3. A hydraulic control arrangement according to claim 1, **characterized by** the fact that a control space on the second active surface of the second demand-feed regulator (46) is connected to the inflow line (26), that the load line (85) can be shut off relative to the first demand-feed regulator (45) by means of a switching valve (90), that, in the blocking position of the switching valve (90), the first active surface of the first demand-feed regulator (45) can be relieved of pressure, and that the spring (48) of the first demand-feed regulator (45) is set at a higher pressure difference than the spring (49) of the second demand-feed regulator (46).

4. A hydraulic control arrangement according to claim 1, **characterized by** the fact that the load-signalling line (85) can be shut off relative to the first demand-feed regulator (45) by means of a first switching valve (90) and relative to the second demand-feed regulator (46) by means of a second switching valve (91), and that, in the blocking position of a switching valve (90, 91), the first active surface of the corresponding demand-feed regulator (45, 46) can be relieved of pressure.

5. A hydraulic control arrangement according to claim 4, **characterized by** the fact that a control space on the second active surface of a demand-feed regulator (45, 46) is connected, upstream of a corresponding nonreturn valve (36, 37), to a flow path running between the corresponding hydraulic pump (30, 31) and the nonreturn valve (36, 37).

6. A hydraulic control arrangement according to claim 4, **characterized by** the fact that a control space on the second active surface of a demand-feed regulator (45, 46) is connected to the inflow line (26).

7. A hydraulic control arrangement according to any of the preceding claims, **characterized by** the fact that the two hydraulic pumps (30, 31) are of different size in terms of the terms of the stroke volume.

8. A hydraulic control arrangement according to any of the preceding claims, **characterized by** the fact that there is a further hydraulic consumer (55) which can be supplied with pressure medium only by the one hydraulic pump (30) from a point upstream of the one nonreturn valve (36).

9. A hydraulic control arrangement according to claim 8, **characterized by** the fact that the further hydraulic consumer (55) is a hydraulic steering system.

10. A hydraulic control arrangement according to claim 8 or 9, **characterized by** the fact that pressure medium can be fed to the further hydraulic consumer (55) via a first metering orifice (57), by which a constant pressure difference can be set by means of an upstream first pressure compensator (58), that pressure medium can be fed to the other hydraulic consumers via second metering orifices (69) followed in each case by a second pressure compensator (74) with a regulating piston (73) which is acted upon in the closing direction by the pressure prevailing in the load-signalling line (85) and by a closing spring (80) and in the opening direction by the pressure downstream of the respective second metering orifice (69), and that the closing springs (80) exert on the regulating pistons (73) a force, the pressure equivalent of which is approximately equal to the pressure difference set across the first metering orifice (57) by the first pressure compensator (58).

11. A hydraulic control arrangement according to claim 8 or 9, **characterized by** the fact that pressure medium can be fed to the further hydraulic consumer (55) via a first metering orifice (57), via which a constant pressure difference can be set by means of an upstream first pressure compensator (58), that pressure medium can be fed to the other hydraulic consumers via second metering orifices (69) followed in each case by a second pressure compensator (74) which is acted upon in the closing direction by the pressure prevailing in the load-signalling line (85) and in the opening direction by the pressure downstream of the respective second metering orifice (69), and that there is a valve (92) which can be controlled by the pressure drop across the first metering orifice (57) and via which the pressure in the load-signalling line (85) can be increased by pressure medium above the highest load pressure being fed in.

12. A hydraulic control arrangement according to any of the preceding claims, **characterized by** the fact that one hydraulic pump (30, 31) is one with a constant stroke volume, and that the demand-feed regulator (45, 46) assigned to this hydraulic pump (30, 31) is a bypass pressure compensator, by which a flow cross-section between a flow path running between the hydraulic pump (30, 31) and the corresponding nonreturn valve (36, 37) and an outflow line (39) leading to a tank (33) can be controlled.

13. A hydraulic control arrangement according to any of the preceding claims, **characterized by** the fact that one hydraulic pump is one with a variable stroke volume, and that the demand-feed regulator assigned to this hydraulic pump is a pump-regulating valve controlling the adjustment of the hydraulic pump.

14. A hydraulic control arrangement according to any of the preceding claims, **characterized by** the fact that, to relieve the first active surface of a demand-feed regulator (45, 46) of pressure, a flow valve (47) is provided, which is arranged between a pressure space adjacent to the first active surface and an outflow line (24) to a tank (33).

15. A hydraulic control arrangement according to claim 14, **characterized by** the fact that the flow valve (47) is a flow-regulating valve.

## Revendications

1. Un dispositif de commande hydraulique avec régulation du débit en fonction du besoin pour l'alimentation en fluide de pression de préférence de plusieurs récepteurs hydrauliques,
doté de distributeurs (12) à commande proportionnelle pour la commande des récepteurs hydrauliques,
doté d'une première pompe (30) hydraulique et doté d'une seconde pompe (31) hydraulique, qui peuvent être entraînées de façon conjointe et qui peuvent refouler du fluide de pression en quantités correspondant au besoin dans une conduite (26) d'alimentation commune, menant vers les distributeurs (12),
doté d'un premier régulateur (45) de débit en fonction du besoin, lequel est dédié à la première pompe (30) hydraulique, et d'un second régulateur (46) de débit en fonction du besoin, lequel est dédié à la seconde pompe (31) hydraulique, cependant que les deux régulateurs (45, 46) de débit en fonction du besoin peuvent être soumis à l'effet d'un ressort (48, 49) et de la pression régnant dans une conduite (85) de signalisation de charge et agissant sur une première surface active, dans le sens d'une augmentation de la quantité de fluide de pression refoulée dans la conduite (26) d'alimentation par la pompe (30, 31) hydraulique correspondante, et soumis à l'effet d'une pression de la pompe sur une seconde surface active, dans le sens d'une réduction de la quantité de fluide de pression refoulée dans la conduite (26) d'alimentation par la pompe (30, 31) hydraulique correspondante,
et doté d'un clapet (36) anti-retour disposé entre la première pompe (30) hydraulique et la conduite (26) d'alimentation et ouvrant dans le sens de cette dernière,
**caractérisé en ce**
**qu'**un clapet (37) anti-retour est également disposé entre la seconde pompe (31) hydraulique et la conduite (26) d'alimentation et ouvre dans le sens de cette dernière et
**que** sont prévus des moyens (90, 91, 95, 96) permettant de faire varier les forces exercées sur les régulateurs (45, 46) de débit en fonction du besoin de façon telle, que les récepteurs hydrauliques puissent être alimentés en fluide de pression aussi bien uniquement par la première pompe (30) hydraulique qu'uniquement par la seconde pompe (31) hydraulique.

2. Un dispositif de commande hydraulique selon la revendication n° 1, **caractérisé en ce qu'**une chambre de commande au niveau de la seconde surface active d'un régulateur (45, 46) de débit en fonction du besoin est raccordée à la conduite (26) d'alimentation et qu'au niveau d'au moins un régulateur (46) de débit en fonction du besoin, le ressort (49) peut être modifié de façon telle, que la différence de pression correspondant à la force exercée par le ressort (48) au niveau du premier régulateur (45) de débit en fonction du besoin soit une fois supérieure et une fois inférieure à la différence de pression correspondant à la force exercée par le ressort (49) au niveau du second régulateur (46) de débit en fonction du besoin.

3. Un dispositif de commande hydraulique selon la revendication n° 1, **caractérisé en ce qu'**une chambre de commande au niveau de la seconde surface active du second régulateur (46) de débit en fonction du besoin est raccordée à la conduite (26) d'alimentation, que la conduite (85) de signalisation de charge peut être isolée du premier régulateur (45) de débit en fonction du besoin par une valve (90) de commutation, que la première surface active du premier régulateur (45) de débit en fonction du besoin peut être déchargée de toute pression dans la position d'isolation de la valve (90) de commutation et que le ressort (48) du premier régulateur (45) de débit en fonction du besoin est calibré sur une différence de pression plus élevée que le ressort (49) du second régulateur (46) de débit en fonction du besoin.

4. Un dispositif de commande hydraulique selon la revendication n° 1, **caractérisé en ce que** la conduite (85) de signalisation de charge peut être isolée du premier régulateur (45) de débit en fonction du besoin par une première valve (90) de commutation et du second régulateur (46) de débit en fonction du besoin par une seconde valve (91) de commutation et que, dans la position d'isolation d'une valve (90, 91) de commutation, la première surface active du régulateur (45, 46) de débit en fonction du besoin correspondant peut être déchargée de toute pression.

5. Un dispositif de commande hydraulique selon la revendication n° 4, **caractérisé en ce qu'**une chambre de commande au niveau de la seconde surface active d'un régulateur (45, 46) de débit en fonction du besoin est raccordée à un cheminement du flux situé entre la pompe (30, 31) hydraulique correspondante et le clapet (36, 37) anti-retour, en amont du clapet (36, 37) anti-retour correspondant.

6. Un dispositif de commande hydraulique selon la revendication n° 4, **caractérisé en ce qu'**une chambre de commande au niveau de la seconde surface active d'un régulateur (45, 46) de débit en fonction du besoin est raccordée à la conduite (26) d'alimentation.

7. Un dispositif de commande hydraulique selon une revendication précédente, **caractérisé en ce que** les deux pompes (30, 31) hydrauliques diffèrent en termes de cylindrée.

8. Un dispositif de commande hydraulique selon une revendication précédente, **caractérisé par** la présence d'un récepteur (55) hydraulique supplémentaire, lequel n'est alimenté en fluide de pression que par l'une des pompes (30) hydrauliques à partir d'un endroit en amont de l'un des clapets (36) anti-retour.

9. Un dispositif de commande hydraulique selon la revendication n° 8, **caractérisé en ce que** le récepteur (55) hydraulique supplémentaire est une commande hydraulique.

10. Un dispositif de commande hydraulique selon la revendication n° 8 ou n° 9, **caractérisé en ce que** du fluide de pression peut être ramené vers le récepteur (55) hydraulique supplémentaire par un premier orifice (57) d'étranglement réglable, sur lequel une première balance (58) de pression branchée en amont peut établir une différence de pression constante, que du fluide de pression peut être alimenté vers les autres récepteurs hydrauliques par de seconds orifices (69) d'étranglement réglables, en aval de chacun desquels est branchée une seconde balance (74) de pression dotée d'un tiroir (73) de régulation, lequel est sollicité dans le sens de la fermeture par la pression régnant dans la conduite (85) de signalisation de charge et par un ressort (80) de fermeture et dans le sens de l'ouverture par la pression régnant en aval du second orifice (69) d'étranglement réglable correspondant et que les ressorts (80) de fermeture exercent sur les tiroirs (73) de régulation une force, dont l'équivalent pression est environ égal à la différence de pression établie par la première balance (58) de pression sur le premier orifice (57) d'étranglement réglable.

11. Un dispositif de commande hydraulique selon la revendication n° 8 ou n° 9, **caractérisé en ce que** du fluide de pression peut être ramené vers le récepteur (55) hydraulique supplémentaire par un premier orifice (57) d'étranglement réglable, sur lequel une première balance (58) de pression branchée en amont peut établir une différence de pression constante, que du fluide de pression peut être ramené vers les autres récepteurs hydrauliques par de seconds orifices (69) d'étranglement réglables, en aval de chacun desquels est branchée une seconde balance (74) de pression, laquelle est sollicitée dans le sens de la fermeture par la pression régnant dans la conduite (85) de signalisation de charge et dans le sens de l'ouverture par la pression en aval du second orifice (69) d'étranglement réglable correspondant, et qu'est prévue une valve (92), qui peut être commandée par la chute de pression sur le premier orifice (57) d'étranglement réglable et qui peut élever la pression régnant dans la conduite (85) de signalisation de charge au-dessus de la pression en charge la plus élevée par alimentation en fluide de pression.

12. Un dispositif de commande hydraulique selon une revendication précédente, **caractérisé en ce qu'**une pompe (30, 31) hydraulique en est une de cylindrée constante et que le régulateur (45, 46) de débit en fonction du besoin dédié à cette pompe (30, 31) hydraulique est une balance de pression branchée en by-pass, qui permet de commander une section de débit entre un cheminement du flux, situé entre la pompe (30, 31) hydraulique et le clapet (36, 37) anti-retour correspondant, et une conduite (39) d'évacuation, menant vers un réservoir (33).

13. Un dispositif de commande hydraulique selon une revendication précédente, **caractérisé en ce qu'**une pompe hydraulique en est une de cylindrée variable et que le régulateur de débit en fonction du besoin dédié à cette pompe hydraulique est une valve de régulation de pompe commandant le déplacement de la pompe hydraulique.

14. Un dispositif de commande hydraulique selon une revendication précédente, **caractérisé en ce qu'**une valve (47) de débit, qui est disposée entre une chambre de pression avoisinant la première surface active et une conduite (24) d'évacuation vers un réservoir (33), est prévue pour le déchargement de toute pression de la première surface active d'un régulateur (45, 46) de débit en fonction du besoin.

15. Un dispositif de commande hydraulique selon la revendication n° 14, **caractérisé en ce que** la valve (47) de débit est un régulateur de débit.
